# EUROPEAN PATENT APPLICATION

(11) **EP 4 618 262 A1**
(43) Date of publication of application: **17.09.2025**
(21) Application number: 25160297.5
(22) Date of filing: 26.02.2025
(51) Int. Cl.: H01M 50/103, H01M 50/15, H01M 50/176, H01M 50/188, H01M 50/553

(54) **MANUFACTURING METHOD OF ELECTRIC STORAGE DEVICE AND ELECTRIC STORAGE DEVICE**

(30) Priority: 15.03.2024 JP 2024041191
(71) Applicant: Prime Planet Energy & Solutions, Inc., Chuo-ku, Tokyo 103-0022 (JP)
(72) Inventor: TOMITA, Yuji, Tokyo 103-0022 (JP)
(74) Representative: Kuhnen & Wacker Patent- und Rechtsanwaltsbüro PartG mbB

(57) **Abstract**

A herein disclosed manufacturing method includes preparing a case part that comprises a penetration hole, inserting an electrode terminal into the penetration hole, arranging the case part and the electrode terminal 20 in an inside cavity of a metal mold M, and injecting a resin R into the inside cavity of the metal mold M. Then, a cavity surface Mcs of the metal mold M includes a protruding part M1a configured to protrude from the first surface M1 toward a peripheral edge part 24a1 of the connection surface 24a. Then, at the injection of the resin R, an injection amount of the resin R to the inside cavity Mc is controlled to make the protruding part M1a dam the resin R flowing into a resin flow channel Mc3. By doing this, it is possible to suppress the resin R from adhering to the connection surface 24a.

## Description

### BACKGROUND

### 1. Technical Field

The present disclosure relates to a manufacturing method of an electric storage device and relates to an electric storage device.

### 2. Description of the Related Art

An electric storage device, such as secondary battery, is used for a power supply of several electric products. This electric storage device includes an electrode assembly and a case in which the electrode assembly is accommodated. This case includes, for example, a case main body that is a box-shaped body having an opening part, and includes an opening-portion covering plate that is configured to cover the opening part of this case main body. In addition, to the case, an electrode terminal being connected to an outside electrically conductive part (a bus bar, or the like), a sealing material configured to establish an insulation between this electrode terminal and the case, or the like, are attached.

An example of this case for the electric storage device is disclosed by Japanese application publication 2022-103899. A lid body (an opening-portion covering plate) described in this cited document includes a terminal member (an electrode terminal), an opening-portion covering plate including an attachment hole for attaching the terminal member, and a sealing material made of resin. Then, the terminal member is attached to the attachment hole of the opening-portion covering plate in a state of being joined to the sealing material. This sealing material is formed by injection molding. In particular, at first, a metal mold including an inside cavity having a shape in accordance with the sealing material is prepared. Next, in this inside cavity of the metal mold, the opening-portion covering plate and the terminal member are arranged. Then, the resin is filled into the inside cavity of the metal mold. By doing this, it is possible to easily form the sealing material that is integrated with the opening-portion covering plate and the terminal member.

### SUMMARY

Anyway, in order to establish connection with the outside electrically conductive part, such as bus bar, the electrode terminal is required to include a connection surface that is exposed to an outside when the electrode terminal has been attached to the case. The outside electrically conductive part is connected to a central part of this connection surface. However, if a component tolerance of each member (the metal mold, the opening-portion covering plate, the electrode terminal, or the like) is increased during the injection molding of the sealing material, there is a possibility that the resin adheres to the central part of the connection surface of the electrode terminal. In that case, a process for removing the resin is required, and thus it causes a reduction in a manufacture efficiency of the electric storage device.

For a circumstance described above, a manufacturing method of an electric storage device including a below described configuration (hereinafter, which might be simply referred to as "manufacturing method", too) is provided.

A herein disclosed manufacturing method of an electric storage device includes preparing a case part that includes a penetration hole, inserting an electrode terminal into the penetration hole, arranging the case part and the electrode terminal in an inside cavity of a metal mold, and injecting a resin into the inside cavity of the metal mold and for integrally forming the case part with a sealing material configured to seal the penetration hole. In the manufacturing method described above, the electrode terminal includes a shaft part that is inserted into the penetration hole, and a plate part that is arranged along the case part when the shaft part has been inserted into the penetration hole. In addition, the plate part includes a connection surface that is exposed to an outside of the case part, a back surface that is positioned at a side opposite to the connection surface, and a side surface that continues to the connection surface and the back surface. On the other hand, the metal mold includes a first surface that is a cavity surface having a surface contact with at least a peripheral edge part of the connection surface of the plate part, a third surface that is a cavity surface opposed with a distance to the side surface of the plate part, and a protruding part that is configured to protrude from the first surface to the peripheral edge part of the connection surface. Then, in the herein disclosed manufacturing method, at the integrally forming, an injection amount of the resin to the inside cavity is controlled to make the protruding part dam the resin having reached to a position between the peripheral edge part of the connection surface and the first surface through a resin flow channel between the side surface and the third surface.

In general, between a side surface of a plate part of the electrode terminal and a cavity surface (a second surface) of the metal mold, a space (a resin flow channel) is formed. The resin supplied to this resin flow channel becomes a side surface protecting part that inhibits a conduction between the plate part of the electrode terminal and the case. However, the side surface of the plate part of the electrode terminal is configured to continue to the connection surface. Thus, if a gap has been caused between the cavity surface (a first surface) of the metal mold and the connection surface of the electrode terminal, there is a fear that the resin invades into the gap between the first surface and the connection surface through the resin flow channel. On the other hand, the cavity surface of the metal mold used in the herein disclosed manufacturing method is provided with the protruding part that is configured to protrude from the first surface toward the peripheral edge part of the connection surface. This protruding part can dam the resin having reached to the peripheral edge part of the connection surface through the resin flow channel. By doing this, it is possible to inhibit the resin from adhering to the central part of the connection surface. As this result, a frequency for performing a removal process for the resin adhered to the central part of the connection surface becomes lower, and thus it is possible to contribute in enhancing the manufacture efficiency of the electric storage device.

### BRIEF DESCRIPTION OF THE DRAWINGS

FIG. 1 is a flowchart that is for explaining a manufacturing method in accordance with a first embodiment.
FIG. 2 is a perspective view that schematically shows an opening-portion covering plate used by the manufacturing method in accordance with the first embodiment.
FIG. 3 is a perspective view that schematically shows an electrode terminal used by the manufacturing method in accordance with the first embodiment.
FIG. 4 is a perspective view that schematically shows an inserting step of the manufacturing method in accordance with the first embodiment.
FIG. 5 is a cross section view that schematically shows an accommodating step of the manufacturing method in accordance with the first embodiment.
FIG. 6 is a cross section view that schematically shows an injecting step of the manufacturing method in accordance with the first embodiment.
FIG. 7 is an enlarged cross section view that schematically shows the injecting step of the manufacturing method in accordance with the first embodiment.
FIG. 8 is a perspective view that schematically shows an electric storage device in accordance with the first embodiment.
FIG. 9 is an enlarged cross section view that schematically shows a structure at an electrode terminal vicinity of the electric storage device in accordance with the first embodiment.
FIG. 10 is an enlarged cross section view that schematically shows an injecting step of a manufacturing method in accordance with a second embodiment.
FIG. 11 is a cross section view that schematically shows an injecting step of a manufacturing method in which the herein disclosed technique is not used.

### DETAILED DESCRIPTION

Below, an embodiment of a herein disclosed technique will be explained, while referring to figures. Incidentally, the matters other than matters particularly mentioned in this specification, and required for practicing the present disclosure (for example, an electrode assembly, a detailed material of an electrolytic solution, or the like) can be grasped as design matters of those skilled in the art based on the related art in the present field. The herein disclosed technique can be executed based on the contents disclosed in the present specification, and on the technical commonsense in the present field. Additionally, in the present specification, a wording "A to B" representing a range semantically covers not only a meaning equal to or more than A and not more than B, but also meanings "more than A" and "less than B".

Incidentally, a term "electric storage device" in the present specification represents a concept semantically covering an apparatus in which, by moving a charge carrier between a pair of electrodes (a positive electrode and a negative electrode), a charge and discharge response is generated. In other words, the electric storage device in accordance with the herein disclosed technique semantically covers not only a secondary battery, such as lithium ion secondary battery, nickel hydrogen battery, and nickel cadmium battery, but also a capacitor, such as lithium ion capacitor, and electric double layer capacitor, or the like.

### <First embodiment>

### 1. Manufacturing method of electric storage device

Below, while referring to figures, an embodiment of a manufacturing method of a herein disclosed electric storage device will be described. Incidentally, reference signs L, R, F, Rr, U, and D of drawings referred in the present specification are to respectively represent left, right, front, rear, up, and down. In addition, reference signs X, Y, and Z of drawings are to respectively represent a width direction, a depth direction, and a height direction of the electric storage device. However, these are merely directions defined for an explanation sake, and are not intended to restrict an disposed aspect of each member in the herein disclosed technique.

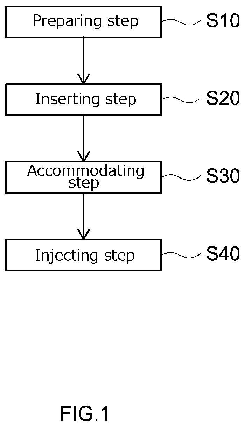

FIG. 1 is a flowchart that is for explaining the manufacturing method in accordance with a first embodiment. As shown in FIG. 1, the manufacturing method in accordance with the present embodiment includes a preparing step S10, an inserting step S20, an accommodating step S30, and an injecting step S40. Below, each of the steps is explained.

### (1) Preparing step S10

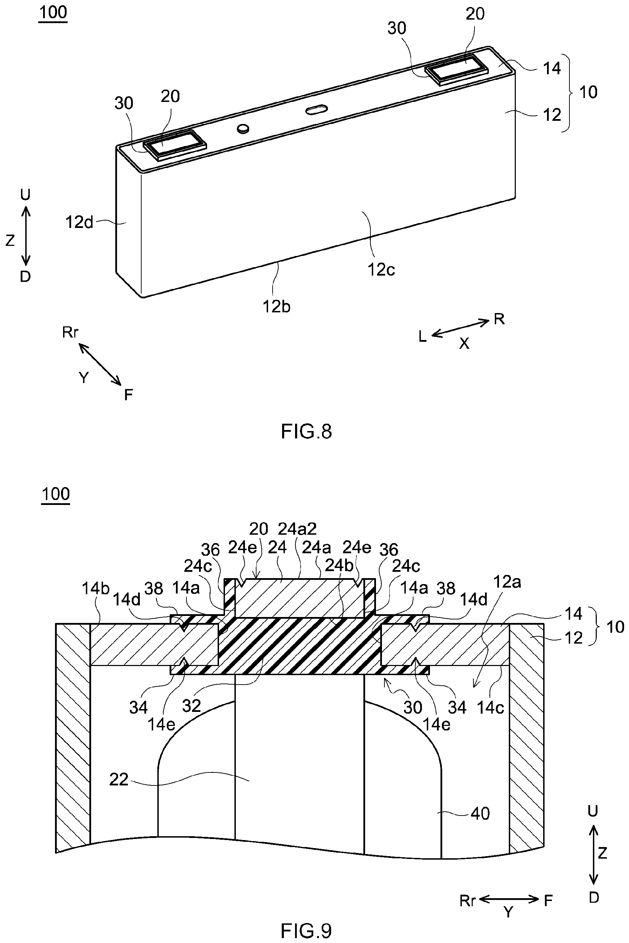

At the present step, a case part having a penetration hole is prepared. The wording "case part" in the present specification means, among plural parts configuring the case of the electric storage device, a part to which an electrode terminal and a sealing material are attached. For example, regarding an electric storage device 100 shown by FIG. 8 described later, a case 10 including a case main body 12 and an opening-portion covering plate 14 is used. Then, in this electric storage device 100, an electrode terminal 20 and a sealing material 30 are attached to the opening-portion covering plate 14. In the configuration described above, the opening-portion covering plate 14 becomes the case part. However, the case part is not restricted to the opening-portion covering plate. For example, in a situation where the electrode terminal and the sealing material are attached to the case main body, the case main body becomes the case part.

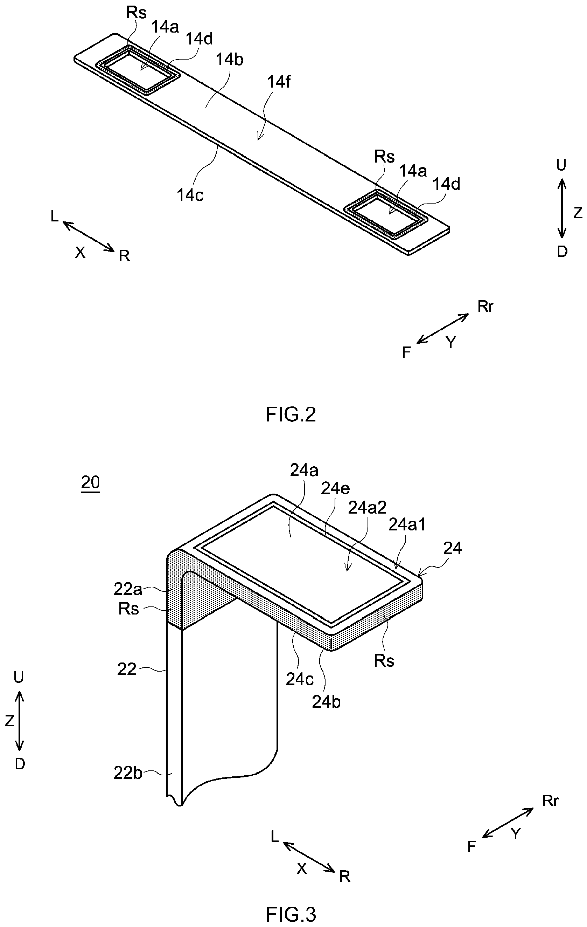

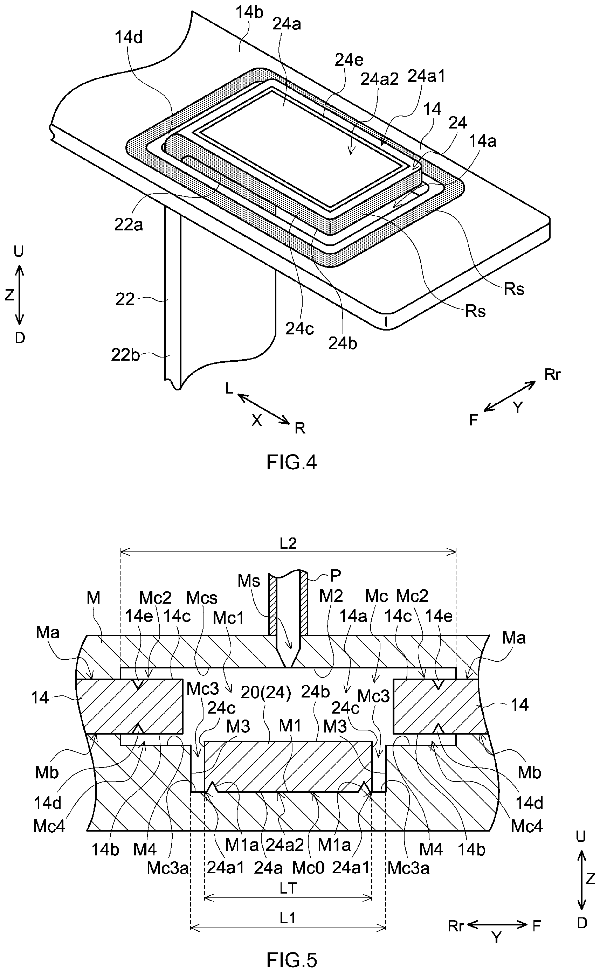

FIG. 2 is a perspective view that schematically shows the opening-portion covering plate used by the manufacturing method in accordance with the first embodiment. As shown in FIG. 2, the case part (the opening-portion covering plate 14) in the present embodiment is a long plate-shaped member configured to extend in a width direction X. Then, at each of both end parts of the opening-portion covering plate 14 in the width direction X, a penetration hole 14a is provided. The penetration hole 14a in FIG. 2 is an opening part that is formed to be rectangular in a plane view. However, a flat surface shape of the penetration hole 14a is not particularly restricted, if the later described electrode terminal 20 can be inserted into it. As another example of the flat surface shape of the penetration hole 14a, it is possible to be a circular shape, an oval shape, or the like. In addition, on an outer side surface 14b of the opening-portion covering plate 14, an outside groove 14d surrounding the penetration hole 14a is formed. Similarly, on an inner side surface 14c of the opening-portion covering plate 14, an inside groove 14e surrounding the penetration hole 14a is formed, too (see FIG. 5). Although more details are described later, the outside groove 14d and the inside groove 14e are contributed in enhancing an adhesive property of the opening-portion covering plate 14 with the sealing material 30 after injection molding, or the like.

### (2) Inserting step S20

FIG. 3 is a perspective view that schematically shows the electrode terminal used by the manufacturing method in accordance with the first embodiment. In addition, FIG. 4 is a perspective view that schematically shows the inserting step of the manufacturing method in accordance with the first embodiment. As shown in FIG. 4, at the inserting step S20, the electrode terminal 20 is inserted into the penetration hole 14a. As shown in FIG. 3, the electrode terminal 20 in the present embodiment is a long member configured to extend in a height direction Z. This electrode terminal 20 includes a shaft part 22 and a plate part 24.

The shaft part 22 is a portion that is inserted into the penetration hole 14a. This shaft part 22 is accommodated at an inside of the case 10, in the electric storage device 100 after the manufacture. As shown in FIG. 3 and FIG. 9, the shaft part 22 in the present embodiment is a long plate-shaped member that is configured to extend in the height direction Z. Although more details are described later, in the electric storage device 100 after the manufacture, a lower end part 22b of the shaft part 22 is connected to the electrode assembly 40 (see FIG. 9). Incidentally, the shape of the shaft part 22 is not restricted to the plate shape, and thus it might be a column shape (a cylindrical column shape, or a prismatic column shape), or the like.

The plate part 24 is a member that is arranged along the case part (the opening-portion covering plate 14) when the shaft part 22 has been inserted into the penetration hole 14a. As shown in FIG. 3, the plate part 24 in the present embodiment is configured to extend in the width direction X continuously from a top end of the shaft part 22. The plate part 24 described above is formed by folding and bending a tip end of a long plate-shaped conductive member. Incidentally, a flat surface shape of the plate part 24 is approximately rectangular. As shown in FIG. 4, an insertion position of the electrode terminal 20 in a plane view is adjusted to make the approximately rectangular plate part 24 cover an upward U of the approximately rectangular penetration hole 14a. As described above, it is preferable that the flat surface shape of the plate part is a shape corresponding to the flat surface shape of the penetration hole. For example, in a situation where the flat surface shape of the penetration hole is a circular shape, it is good to make the flat surface shape of the plate part be the circular shape, too. By doing this, it becomes easy to perform resin filling at the later described injecting step S40. Incidentally, it is good even if the electrode terminal is not an integral part in which the shaft part and the plate part are continued. For example, it is good that the shaft part and the plate part are individually manufactured and then these are combined so as to construct the electrode terminal.

The plate part 24 in the present embodiment includes a connection surface 24a exposed to an outside of the case part (the opening-portion covering plate 14), a back surface 24b positioned at a side opposite to the connection surface 24a, and a side surface 24c continued to the connection surface 24a and the back surface 24b. As shown by FIG. 9 described later, in a situation where the electric storage device 100 is constructed, the connection surface 24a of the plate part 24 is arranged outside the case 10. By doing this, an outside electrically conductive part, such as bus bar, can be connected to the plate part 24 of the electrode terminal 20. In addition, the back surface 24b of the plate part 24 and the side surface 24c are covered by the sealing material 30. Incidentally, it is preferable that an insertion height of the electrode terminal 20 is adjusted to arrange the back surface 24b of the plate part 24 at the upward U more than the outer side surface 14b of the opening-portion covering plate 14. By doing this, it becomes possible to sufficiently secure a flow channel between a first filled space Mc1 and a fourth filled space Mc4 which are described later. As this result, a base part 32 and an outside insulating part 38 of the sealing material 30 in FIG. 9 are properly formed, and thus it is possible to further stably fix each member.

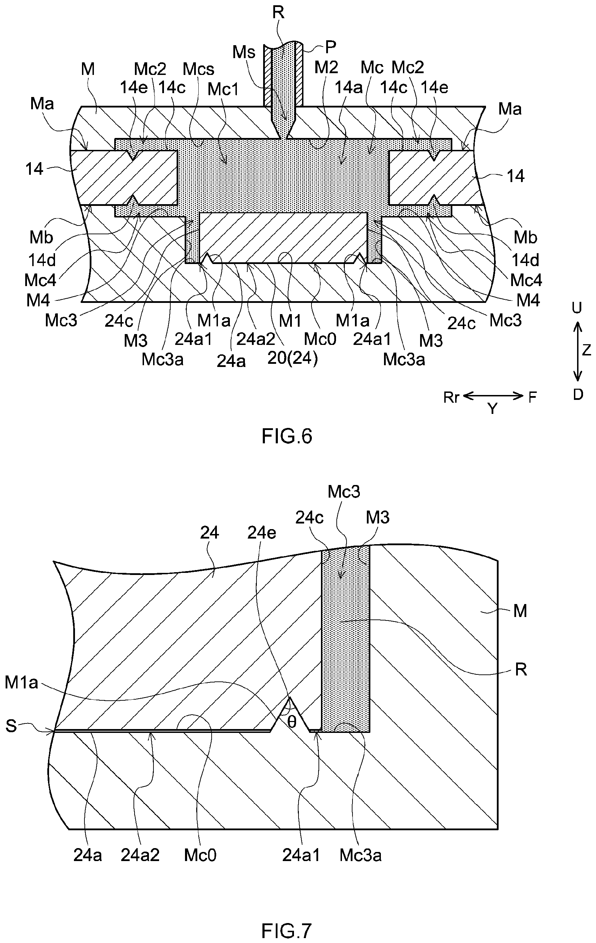

Additionally, regarding the electrode terminal 20 in the present embodiment, a recessed part 24e being depressed from the connection surface 24a is formed at a peripheral edge part 24a1 of the connection surface 24a. This recessed part 24e is a ring-shaped recessed groove that is continuously formed to be along the peripheral edge part 24a1 of the connection surface 24a. Although more details are described later, this recessed part 24e is formed to be fit with a protruding part M1a of a metal mold M (see FIG. 7).

### (3) Accommodating step S30

FIG. 5 is a cross section view that schematically shows the accommodating step of the manufacturing method in accordance with the first embodiment. As shown in FIG. 5, at the accommodating step S30, the case part (the opening-portion covering plate 14) and the electrode terminal 20 are arranged at an inside cavity Mc of the metal mold M. In particular, at the inside cavity Mc of the metal mold M, a periphery of the penetration hole 14a of the opening-portion covering plate 14, a whole of the plate part 24, and a top end part 22a of the shaft part 22 are accommodated. On the other hand, as the illustration is omitted, neither of the lower end part 22b of the shaft part 22 (see FIG. 3) and a central part 14f of the opening-portion covering plate 14 in the width direction X (see FIG. 1) are accommodated at the inside cavity Mc, and they are exposed to the outside of the metal mold M. Additionally, at the accommodating step S30 in the present embodiment, the upper and lower positions of the electrode terminal 20 and the opening-portion covering plate 14 are reversed. By doing this, the back surface 24b of the plate part 24 and the inner side surface 14c of the opening-portion covering plate 14 are arranged upward U. In this case, under a situation where temperatures of the electrode terminal 20 and the metal mold M are low at an initial of the later described injecting step S40, a resin R becomes to easily flow into a resin flow channel Mc3. As this result, it is possible to further suitably inhibit the resin R from invading into a resin block part Mc0.

Incidentally, the metal mold M used at the present step is configured with a metal material having a high strength, such as stainless steel type, die steel type, and maraging steel type. By doing this, it is possible to suppress deformation/breakage of the metal mold M during the injecting step S40. In addition, at the inside of the metal mold M, a cavity surface Mcs corresponding to a shape of the sealing material 30 being a mold object is formed. The wording "inside cavity Mc of the metal mold M" in the present specification means a space surrounded by the cavity surface Mcs of the metal mold M. Then, the cavity surface Mcs in the present embodiment includes a first surface M1 to a fourth surface M4 which are described below.

### (a) First surface M1

As shown in FIG. 5, the first surface M1 is the cavity surface Mcs that has a surface contact with at least the peripheral edge part 24a1 of the connection surface 24a of the plate part 24. As described above, by making the surface contact of the peripheral edge part 24a1 of the connection surface 24a with the first surface M1, it is possible to inhibit the resin from invading into a central part 24a2 of the connection surface 24a. Incidentally, the first surface M1 in the present embodiment is a flat surface having the surface contact with a whole surface of the connection surface 24a of the plate part 24. In other words, the first surface M1 in the present embodiment has the surface contact not only with the peripheral edge part 24a1 of the connection surface 24a but also with the central part 24a2 of the connection surface 24a. By doing this, it is possible to further suitably inhibit the resin from adhering to the central part 24a2 of the connection surface 24a. In the present specification, an area having the surface contact of the central part 24a2 of the connection surface 24a with the first surface M1 is referred to as "resin block part Mc0".

The metal mold M in the present embodiment includes the protruding part M1a that is configured to protrude from the first surface M1 to the peripheral edge part 24a1 of the connection surface 24a of the plate part 24. Although more details are described later, this protruding part M1a has a function of damming the resin flowing from the peripheral edge part 24a1 of the connection surface 24a to the central part 24a2. By doing this, it is possible to inhibit the resin from adhering to the central part 24a2 of the connection surface 24a. Incidentally, the protruding part M1a in the present embodiment is a ring-shaped protruding part that is provided continuously in a circumferential direction to be opposed over a whole circumference of the peripheral edge part 24a1 of the connection surface 24a of the plate part 24.

Incidentally, as shown in FIG. 5, it is preferable that a dimension L1 of the first surface M1 in a depth direction Y is made to be longer than a dimension LT of the plate part 24 in the depth direction Y. By doing this, it becomes easy to make the first surface M1 have the surface contact with the connection surface 24a of the plate part 24. Particularly, in a situation where the dimension LT of the plate part 24 and the dimension L1 of the first surface M1 are approximately similar, there is a fear that the plate part 24 is disposed onto a third surface M3 of the metal mold M. In this situation, a gap is caused on the resin block part Mc0, and thus the possibility of having the resin adhering to the connection surface 24a is increased. On the other hand, it becomes easy to have the surface contact of the first surface M1 with the connection surface 24a when the first surface M1 is made to be wider than the plate part 24, and thus it is possible to further suitably inhibit the resin from adhering to the connection surface 24a. For example, a difference (L1-LT) between the dimension L1 of the first surface M1 and the dimension LT of the plate part 24 is preferably equal to or more than 0.001 mm, further preferably equal to or more than 0.005 mm, or preferably in particular equal to or more than 0.01 mm. On the other hand, if the difference (L1-LT) between the dimension L1 of the first surface M1 and the dimension LT of the plate part 24 becomes too large, it becomes easy to make the resin reach to a tip end Mc3a of the later described resin flow channel Mc3. From a perspective described above, the difference (L1-LT) between the dimension L1 of the first surface M1 and the dimension LT of the plate part 24 is preferably equal to or less than 0.2 mm, further preferably equal to or less than 0.15 mm, or preferably in particular equal to or less than 0.1 mm.

### (b) Second surface M2

A second surface M2 is a cavity surface Mcs opposed with a distance to the back surface 24b of the plate part 24. In this distance between the second surface M2 and the back surface 24b, a space is formed which is filled with the resin at the injecting step S40. In an explanation described below, this space is referred to as "first filled space Mc1". The resin having filled this first filled space Mc1 becomes the base part 32 of the sealing material 30 (see FIG. 9).

In addition, a dimension L2 of the second surface M2 in the depth direction Y is longer than the dimension LT of the plate part 24 in the depth direction Y. Then, both end parts of the second surface M2 in the depth direction Y are opposed over the plate part 24 to the inner side surface 14c of the opening-portion covering plate 14. Below, a space where the both end parts of the second surface M2 and the inner side surface 14c of the opening-portion covering plate 14 are opposed is referred to as "second filled space Mc2". The resin having filled this second filled space Mc2 becomes an inside insulating part 34 of the sealing material 30 (see FIG. 9). Incidentally, the second surface M2 of the metal mold M is configured to extend to an outer side (front F and rear Rr) more than the inside groove 14e of the opening-portion covering plate 14. As this result, the inside insulating part 34 is formed to cover the inside groove 14e. By doing this, it is possible to enhance an adhesive property of the sealing material 30 with the opening-portion covering plate 14. In addition, the resin having been supplied to the second filled space Mc2 enters into the inside groove 14e, and then reaches to a contact surface Ma of the inner side surface 14c of the opening-portion covering plate 14 with the metal mold M. By doing this, it is possible to inhibit drastic supply of a large amount of resin onto the contact surface Ma, and thus it is possible to suppress a resin leakage to the outside of the metal mold M.

### (c) Third surface M3

The third surface M3 is the cavity surface Mcs that is opposed with a distance to the side surface 24c of the plate part 24. In this distance between the third surface M3 and the side surface 24c, the resin flow channel Mc3 is formed into which the resin flows. The resin having filled this resin flow channel Mc3 becomes a side surface protecting part 36 that is configured to cover the side surface 24c of the plate part 24 (see FIG. 9). Although more details are described later, the side surface protecting part 36 becomes an insulating member that is configured to inhibit conduction between the plate part 24 and the case 10 (the opening-portion covering plate 14). In addition, as shown in FIG. 5, the tip end Mc3a of the resin flow channel Mc3 is positioned adjacent to the resin block part Mc0.

Incidentally, in the present embodiment, the cavity surface Mcs (in other words, the third surface M3) configured to form the resin flow channel Mc3 is configured to continue along the circumferential direction of the side surface 24c of the plate part 24. As this result, in the electric storage device 100 after the manufacture, the side surface protecting part 36 configured to continuously cover the side surface 24c of the plate part 24 is formed. By doing this, it is possible to further suitably suppress the conduction between the plate part 24 and the case 10 (the opening-portion covering plate 14). In addition, according to the herein disclosed technique, it is possible to suppress the resin R from invading to the resin block part Mc0 through the tip end Mc3a of the resin flow channel Mc3. Thus, even in a situation where the resin flow channel Mc3 continuing in the circumferential direction is formed, it is possible to suppress the resin from adhering to the connection surface 24a of the plate part 24.

### (d) Fourth surface M4

Next, the fourth surface M4 is the cavity surface Mcs that is opposed with a distance to the outer side surface 14b of the opening-portion covering plate 14. The space where the fourth surface M4 of this metal mold M and the outer side surface 14b of the opening-portion covering plate 14 are opposed is referred to as "fourth filled space Mc4". The resin having filled this fourth filled space Mc4 becomes the outside insulating part 38 of the sealing material 30 (see FIG. 9). Incidentally, the fourth surface M4 of the metal mold M is configured to extend to an outer side more than the outside groove 14d of the outer side surface 14b of the opening-portion covering plate 14. As this result, the inside insulating part 34 configured to cover the outside groove 14d is formed. By doing this, it is possible to enhance the adhesive property of the sealing material 30 with the opening-portion covering plate 14. In addition, similarly to the above described inside groove 14e, the outside groove 14d has a function of suppressing a resin leakage caused from a contact surface Mb of the outer side surface 14b of the opening-portion covering plate 14 with the metal mold M.

### (4) Injecting step S40

FIG. 6 is a cross section view that schematically shows the injecting step of the manufacturing method in accordance with the first embodiment. As shown in FIG. 6, at the present step, the resin R is injected into the inside cavity Mc of the metal mold M. By doing this, it is possible to integrally form the case part (the opening-portion covering plate 14) and the sealing material 30 configured to seal the penetration hole 14a (see FIG. 9). In addition, the sealing material 30 is integrated with the electrode terminal 20 (in particular, the plate part 24 and the top end part 22a of the shaft part 22) having been inserted into the penetration hole 14a. Incidentally, as the resin R filling at the present step, it is possible to use a thermoplastic resin, such as polyethylene, polyamide, polypropylene, and vinyl chloride resin. By injecting these thermoplastic resins into the inside cavity Mc and then cooling the resultant, it is possible to easily form the sealing material 30.

Below, the injection of the resin R at the present step will be described. The metal mold M in the present embodiment includes an injection hole Ms that is configured to penetrate the metal mold M. This injection hole Ms is formed on the second surface M2 to be opposed to the back surface 24b of the plate part 24. In addition, the injection hole Ms is connected to a resin supply source (omitted in drawings) through a transfer pipe P. The resin R having been supplied from the resin supply source is injected into the inside cavity Mc of the metal mold M through the transfer pipe P and the injection hole Ms. Then, the resin R having been injected firstly fills the first filled space Mc1 that is a space having the largest volume. Then, the resin R is supplied, through this first filled space Mc1, to the second filled space Mc2, the resin flow channel Mc3, the fourth filled space Mc4, and the like. By doing this, it is possible to inhibit a large amount of resin R from being drastically supplied into a space that is comparatively narrow, and thus it is possible to suppress the resin leakage and a mold failure. Particularly, by supplying the resin R through the first filled space Mc1 into the resin flow channel Mc3, a supply speed of the resin R directed toward the tip end Mc3a of the resin flow channel Mc3 is reduced. By doing this, it is possible to further suitably suppress the resin R from invading into the resin block part Mc0.

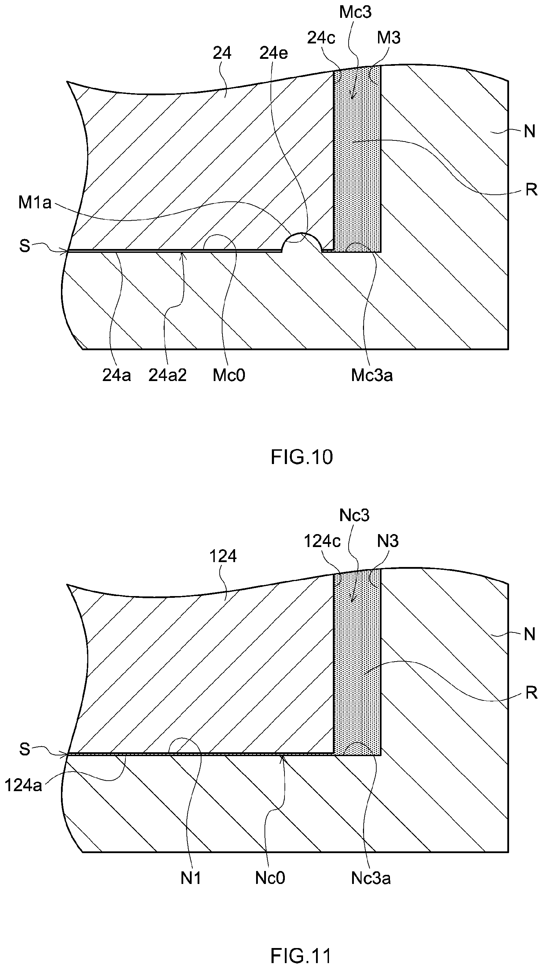

Here, as described above, the metal mold M in the present embodiment includes the protruding part M1a configured to protrude from the first surface M1 to the peripheral edge part 24a1 of the connection surface 24a of the plate part 24. Then, at the present step, an injection amount of the resin R to the inside cavity Mc is controlled to make the protruding part M1a dam the resin R having reached to a position between the peripheral edge part 24a1 of the connection surface 24a and the first surface M1 through the resin flow channel Mc3 positioned between the side surface 24c and the third surface M3. By doing this, it is possible to suppress the resin R from adhering to the central part 24a2 of the connection surface 24a. This point is explained while compared with a form in which the herein disclosed technique is not used. FIG. 7 is an enlarged cross section view that schematically shows the injecting step of the manufacturing method in accordance with the first embodiment. In addition, FIG. 11 is a cross section view that schematically shows an injecting step of a manufacturing method in which the herein disclosed technique is not used.

A metal mold N shown in FIG. 11 includes a first surface N1 configured to have a surface contact with a connection surface 124a of the plate part 124, and a third surface N3 configured to be opposed to the side surface 124c of the plate part 124 with a distance. In this situation, a resin flow channel Nc3 is formed between the side surface 124c and the third surface N3. A tip end Nc3a of this resin flow channel Nc3 is positioned adjacent to a portion where the connection surface 124a has a surface contact with the first surface N1. Thus, if a gap S is caused between the connection surface 124a and the first surface N1 by a component tolerance or the like, the resin R invades easily into the gap S through the tip end Nc3a of the resin flow channel Nc3. By doing this, the resin adheres to a central part 124a2 of the connection surface 124a of the plate part 124, and thus it is required to perform a process for removing the resin.

On the other hand, as shown in FIG. 7, regarding the present embodiment, the protruding part M1a is configured to protrude from the first surface M1 of the metal mold M toward the peripheral edge part 24a1 of the connection surface 24a of the plate part 24. This protruding part M1a is disposed between the tip end Mc3a of the resin flow channel Mc3 and the central part 24a2 of the connection surface 24a. Thus, it is possible to make the protruding part M1a dam the resin R having reached to the peripheral edge part 24a1 of the connection surface 24a through the tip end Mc3a of the resin flow channel Mc3. Therefore, by the manufacturing method in accordance with the present embodiment, it is possible to suppress the resin R from adhering to the central part 24a2 of the connection surface 24a, even if the surface contact of the connection surface 24a with the first surface M1 is not sufficiently formed by the component tolerance, or the like, so as to cause a gap on the resin block part Mc0. By doing this, a frequency of performing the resin removal process after the injecting step S40 is decreased, and thus it is possible to contribute in enhancing the manufacture efficiency for the electric storage device 100.

Incidentally, even in a situation where the protruding part M1a is provided on the first surface M1, there is a possibility that the resin R leaches to the central part 24a2 of the connection surface 24a over the protruding part M1a if the resin R at a low viscosity is excessively injected into the inside cavity Mc. Thus, at the injecting step S40 in the present embodiment, the injection amount of the resin R to the inside cavity Mc is controlled to make the protruding part M1a dam the resin R having reached to the peripheral edge part 24a1 of the connection surface 24a. By doing this, it is possible to properly suppress the resin R from adhering to the central part 24a2 of the connection surface 24a. Incidentally, a timing for stopping the injection of the resin R is changed according to a viscosity of the resin R, an injection speed of the resin R, a dimension of the resin flow channel Mc3, a protruding amount of the protruding part M1a, or the like, and thus it is not restricted to a specific injection time. For example, it is good that a dimension of each part and a kind of the resin are decided, and then a preliminary test for examining a relation of an adhesion amount of the resin R to the central part 24a2 of the connection surface 24a with an inject condition (the injection speed and the injection time). It is possible based on a result of this preliminary test to decide an appropriate timing for stopping the injection of the resin R.

In addition, as described above, the protruding part M1a in the present embodiment is a ring-shaped protruding part that is provided continuously in the circumferential direction to be opposed to a whole circumference of the peripheral edge part 24a1 of the connection surface 24a of the plate part 24. This ring-shaped protruding part M1a can inhibit the resin R over the whole circumference from invading to the resin block part Mc0 from the tip end Mc3a of the resin flow channel Mc3. As this result, it is possible to further surely suppress the resin R from adhering to the central part 24a2 of the connection surface 24a. Incidentally, forming the ring-shaped protruding part is not an essential matter of the herein disclosed technique. In particular, an invasion position of the resin R of the connection surface 24a of the plate part 24 in the circumferential direction is changed in response to an influence of various elements (a shape of the metal mold, a shape of the electrode terminal, a position of the injection hole, a viscosity of the resin, an injection speed of the resin, or the like). Thus, in a situation where a position, into which the resin R easily invades, is previously known, the protruding part might be locally formed at the portion into which this invasion easily occurs. For example, on a portion closer to the injection hole even in the peripheral edge part of the connection surface, there is a tendency that an invasion amount of the resin R becomes larger. Thus, in the herein disclosed technique, the protruding part might be provided only at a position where the invasion amount of the resin is larger. Even with the configuration described above, it is possible to suppress the resin from adhering to the central part of the connection surface. In addition, the protruding part might not be provided on an area where the resin does not reach to the connection surface even if the resin R invades.

Additionally, in the present embodiment, the recessed part 24e into which the protruding part M1a of the metal mold M fits is formed at the peripheral edge part 24a1 of the connection surface 24a of the electrode terminal 20 In accordance with such a configuration, it is possible to surely inhibit the breakage of the electrode terminal 20 or the deformation of the metal mold M. Particular, in the herein disclosed technique, the protruding part of the metal mold is made to invade to the peripheral edge part of the connection surface of the electrode terminal. By doing this, it is possible to make the protruding part dam the resin directed to the central part of the connection surface. However, in a situation where the peripheral edge part of the connection surface being an invasion object of the protruding part is flat, it is required to make the protruding part of the metal mold implement press deformation on the peripheral edge part of the connection surface. At that time, there is a fear that the breakage of the electrode terminal, the deformation of the metal mold, and the like, are caused. On the other hand, if the recessed part 24e is previously formed at the peripheral edge part 24a1 of the connection surface 24a of the electrode terminal 20, it is not required to make the protruding part M1a of the metal mold M implement the press deformation on the connection surface 24a, and thus it is possible to inhibit the breakage of the electrode terminal 20 and the deformation of the metal mold M.

Additionally, the protruding part M1a in the present embodiment is a tapered protruding part whose cross section area size is getting smaller at a position closer to the tip end. By including this tapered protruding part M1a, it is possible to further suitably suppress the resin R from invading to the central part 24a2 of the connection surface 24a. In particular, the tapered protruding part M1a has the tip end being pointy, and thus it is possible to easily make it fit into the recessed part 24e of the connection surface 24a of the electrode terminal 20. By doing this, it is possible to inhibit the invasion of the resin R caused by a fit failure. Additionally, in an aspect of making the protruding part of the metal mold implement the press deformation on the peripheral edge part of the connection surface, a stress is concentrated on the tip end of the tapered protruding part, and thus it becomes easy to implement the press deformation on the connection surface of the electrode terminal.

Incidentally, there is a tendency that the strength of the protruding part M1a is enhanced further as a tapered angle θ of the protruding part M1a becomes larger. On the other hand, as the tapered angle θ of the protruding part M1a becomes smaller, it becomes easier to make the protruding part M1a invade to the peripheral edge part 24a1 of the connection surface 24a of the electrode terminal 20. In consideration of this contradiction relation, it is preferable that the tapered angle θ of the tip end of the protruding part M1a is within a range of 30° to 90°.

Additionally, in a situation where the recessed part 24e is previously formed at the peripheral edge part 24a1 of the connection surface 24a of the electrode terminal 20 as shown by the present embodiment, it is preferable that a side surface 24e1 of the recessed part 24e is inclined to implement a surface contact with an inclined surface M1b of the tapered protruding part M1a. In particular, it is preferable that an inclined angle of the side surface 24e1 of the recessed part 24e is within a range being ±1°of an inclined angle of the inclined surface M1b of the protruding part M1a. In accordance with such a configuration, even if the insertion position of the protruding part M1a with respect to the recessed part 24e is deviated a little, it is possible to implement the surface contact of the side surface 24e1 of the recessed part 24e with the inclined surface M1b of the protruding part M1a. By doing this, even if the deviation is caused on an accommodating position at the accommodating step S30, it is possible to suppress the resin from invading to the central part 24a2 of the connection surface 24a.

In addition, it is preferable that a rough surface processing part Rs is formed on a surface that comes into contact with the opening-portion covering plate 14 or the resin R of the electrode terminal 20. By doing this, it is possible to enhance the adhesive property with the sealing material 30 after a curing operation. For example, as shown in FIG. 2 to FIG. 4, the rough surface processing part Rs is formed on the outer side surface 14b of the opening-portion covering plate 14 at a periphery of the penetration hole 14a, the side surface 24c of the plate part 24, the top end part 22a of the shaft part 22, or the like. In addition, as the illustration is omitted, the rough surface processing part is formed additionally on the inner side surface 14c of the opening-portion covering plate 14 at the periphery of the penetration hole 14a, the back surface 24b of the plate part 24, or the like. Incidentally, the rough surface processing part Rs can be formed by a conventionally known rough surface processing treatment (sandblasting, chemical process, or the like). If the rough surface processing part Rs is formed on the side surface 24c of the plate part 24 among them, a distribution speed of the resin R on the resin flow channel Mc3 is reduced. By doing this, it becomes hard for the resin R to reach the tip end Mc3a of the resin flow channel Mc3. Thus, from a perspective of suppressing the resin R from adhering to the connection surface 24a of the plate part 24, it is particularly preferable that the rough surface processing part Rs is formed on the side surface 24c of the plate part 24.

### 2. Electric storage device

Next, the electric storage device manufactured by the above described manufacturing method will be described. FIG. 8 is a perspective view that schematically shows the electric storage device in accordance with the first embodiment. FIG. 9 is an enlarged cross section view that schematically shows a structure at an electrode terminal vicinity of the electric storage device shown by FIG. 8.

As shown by FIG. 8 and FIG. 9, the electric storage device 100 in accordance with the present embodiment includes the electrode assembly 40 and the case 10 configured to accommodate the electrode assembly 40. In addition, as the illustration is omitted, an electrolytic solution is also accommodated inside the case 10. The electrode assembly 40 and the electrolytic solution are power generating elements of the electric storage device 100. As these power generating elements, it is possible to use ones capable of being used for a conventionally known electric storage device without particular restriction, and thus a detailed explanation is omitted.

The case 10 is a flat box-shaped container having an internal space. The case 10 in the present embodiment includes the case main body 12 and the opening-portion covering plate 14. The case main body 12 is a box-shaped body that has an upper surface opening 12a. In particular, the case main body 12 includes a bottom part 12b being a long rectangular plate-shaped member, a pair of first side walls 12c configured to extend upward U from long sides (sides along the width direction X) of the bottom part 12b, and a pair of second side walls 12d configured to extend upward U from short sides (sides along the depth direction Y) of the bottom part 12b. Then, on an upper surface of the case main body 12, the upper surface opening 12a is formed which is surrounded by each of top ends of the first side wall 12c and the second side wall 12d. On the other hand, the opening-portion covering plate 14 is a rectangular plate-shaped member configured to cover the upper surface opening 12a of the case main body 12. Particularly, as shown in FIG. 2, the opening-portion covering plate 14 is fit into the top end part of the case main body 12. Then, a boundary between the case main body 12 and the opening-portion covering plate 14 is joined by laser welding, or the like. Incidentally, it is preferable that the case 10 (the case main body 12 and the opening-portion covering plate 14) is a member that is made of metal and has a strength being equal to or more than a predetermined level. As an example of a material of the case 10, it is possible to use a metal material, such as aluminum and aluminum alloy.

As described above, regarding the electric storage device 100 in accordance with the present embodiment, a case part for attaching the electrode terminal 20 and the sealing material 30 is the opening-portion covering plate 14. In other words, the case 10 in the present embodiment includes the case part (the opening-portion covering plate 14) including the penetration hole 14a, the electrode terminal 20 having been inserted into the penetration hole 14a, and the sealing material 30 configured to seal the penetration hole 14a and being a resin member integrated with the case part (the opening-portion covering plate 14). Incidentally, the wording "integrated" in the present specification means that the metal member (the opening-portion covering plate, the electrode terminal, or the like) and the resin member (the sealing material, or the like) are fixed.

Then, the electrode terminal 20 includes the shaft part 22 having been inserted into the penetration hole 14a of the opening-portion covering plate 14, and the plate part 24 having been arranged along the case part (the opening-portion covering plate 14). Then, the plate part 24 includes the connection surface 24a exposed to the outside of the case 10, the back surface 24b positioned at a side opposite to the connection surface 24a, and the side surface 24c continuing to the connection surface 24a and the back surface 24b. In the electric storage device 100 including the electrode terminal 20 having the above described configuration, the shaft part 22 and the electrode assembly 40 are connected inside the case 10. On the other hand, onto the connection surface 24a of the plate part 24, the outside electrically conductive part (omitted in drawings), such as bus bar, is connected. By doing this, a conduction path reaching from the electrode assembly 40 to the outside electrically conductive part can be easily formed.

Additionally, regarding the electric storage device 100 in accordance with the present embodiment, the recessed part 24e depressed from the connection surface 24a is formed at the peripheral edge part 24a1 of the connection surface 24a. This recessed part 24e might be previously formed before the accommodating step S30, or might be produced by making the protruding part M1a of the metal mold M implement the press deformation of the connection surface 24a. Incidentally, in the electrode terminal 20 including this recessed part 24e, a border between the resin and the metal on the upper surface of the electrode terminal 20 becomes apparent, and thus it has an advantage of further accurately performing decision of a terminal position for an image inspection of the electric storage device 100 after the manufacture, or the like.

On the other hand, the sealing material 30 includes the side surface protecting part 36 configured to cover the side surface 24c of the plate part 24. According to this side surface protecting part 36, it is possible to suppress the conduction between the plate part 24 and the case 10 (the opening-portion covering plate 14). In particular, if the side surface 24c of the plate part 24 is exposed, there is a fear that the electrode terminal 20 conducts with the case 10 when an electrically conductive foreign substance (a metal powder, a liquid, or the like) adheres to this side surface 24c. The side surface protecting part 36 can inhibit the conduction between the plate part 24 and the case 10 through the electrically conductive foreign substance as described above. This side surface protecting part 36 is formed by filling the resin R into the resin flow channel Mc3 (see FIG. 6 and FIG. 7).

Additionally, the sealing material 30 in the present embodiment includes not only the above described side surface protecting part 36 but also the base part 32, the inside insulating part 34, and the outside insulating part 38. The base part 32 is a portion where filling is performed into the penetration hole 14a of the opening-portion covering plate 14. This base part 32 is a resin member coming into contact with the back surface 24b of the plate part 24, the outer side surface of the penetration hole 14a, and the top end part 22a of the shaft part 22 (see FIG. 4). This base part 32 is a base material configured to fix the electrode terminal 20 and the opening-portion covering plate 14 in an insulation state. In addition, the inside insulating part 34 is a resin member configured to extend along the inner side surface 14c of the opening-portion covering plate 14. This inside insulating part 34 is configured to establish an insulation between the shaft part 22 and the opening-portion covering plate 14. In addition, the inside insulating part 34 further has a function for inhibiting the opening-portion covering plate 14 from coming into contact with the electrode assembly 40 when the electrode assembly 40 moves upward and downward due to a vibration, or the like. In addition, the outside insulating part 38 is a resin member configured to extend along the outer side surface 14b of the opening-portion covering plate 14. By providing this outside insulating part 38, it is possible to make the insulating member cover not only the side surface 24c of the plate part 24 but also the outer side surface 14b of the opening-portion covering plate 14. By doing this, it is possible to further suitably inhibit the conduction between the electrode terminal 20 and the opening-portion covering plate 14 through the electrically conductive foreign substance.

Above, one embodiment of the herein disclosed technique has been explained. However, the herein disclosed technique is not restricted to the above described embodiment. Below, another embodiment of the herein disclosed technique will be described.

### <Second embodiment>

For example, the metal mold M of the first embodiment includes the tapered protruding part M1a (see FIG. 7). However, the cross section shape of the protruding part is not particularly restricted, and thus various shapes, such as rectangular shape and semicircular shape, can be used. For example, FIG. 10 is an enlarged cross section view that schematically shows the injecting step of a manufacturing method in accordance with a second embodiment. The metal mold M shown by FIG. 10 is formed to have the protruding part M1a, whose cross section shape is semicircular, disposed on the first surface M1. This protruding part M1a having the semicircular cross section shape is superior in the strength more than the tapered protruding part M1a shown by FIG. 7, and thus it can suppress the deformation or breakage on the metal mold. However, regarding this protruding part M1a having the cross section semicircular shape, it becomes difficult to dam the invasion of the resin R when the insertion position is deviated with respect to the recessed part 24e. Therefore, from a perspective of surely inhibiting the resin R from adhering to the central part 24a2 of the connection surface 24a, it is further preferable to form the tapered protruding part M1a shown by FIG. 7.

### <Another embodiment>

In addition, as shown by FIG. 7 and FIG. 10, the metal mold M of the first and second embodiments includes the first surface M1 having the surface contact with the whole surface of the connection surface 24a. However, the first surface of the metal mold might be come into contact with only the peripheral edge part of the connection surface. As described above, according to the herein disclosed technique, it is possible to make the protruding part dam the resin moving toward the central part of the connection surface, and thus it is possible to suppress the resin from adhering to the central part of the connection surface even if the central part of the connection surface does not have the surface contact with the first surface. However, from a perspective of further surely suppressing the resin from adhering to the central part of the connection surface, it is further preferable that the whole surface of the connection surface has the surface contact with the first surface of the metal mold as shown in the first and second embodiments.

Above, the herein disclosed technique has been explained in detail. However, these are merely illustrations, and are not to restrict the scope of claims. The technique recited in claims contains matters in which the above-illustrated specific example is variously deformed or changed. In other words, the herein disclosed technique semantically covers forms recited in item 1 to item 7 described below.

### [Item 1]

A manufacturing method of an electric storage device, comprising:
preparing a case part that comprises a penetration hole;
inserting an electrode terminal into the penetration hole;
arranging the case part and the electrode terminal in an inside cavity of a metal mold; and
injecting a resin into the inside cavity of the metal mold and for integrally forming the case part with a sealing material configured to seal the penetration hole, wherein
the electrode terminal comprises:
   a shaft part that is inserted into the penetration hole; and
   a plate part that is arranged along the case part when the shaft part has been inserted into the penetration hole,
the plate part comprises:
   a connection surface that is exposed to an outside of the case part;
   a back surface that is positioned at a side opposite to the connection surface; and
   a side surface that continues to the connection surface and the back surface, the metal mold comprises:
      a first surface that is a cavity surface having a surface contact with at least a peripheral edge part of the connection surface of the plate part;
      a third surface that is a cavity surface opposed with a distance to the side surface of the plate part; and
      a protruding part that is configured to protrude from the first surface (M1) to the peripheral edge part of the connection surface, and
at the integrally forming, an injection amount of the resin to the inside cavity is controlled to make the protruding part dam the resin having reached to a position between the peripheral edge part of the connection surface and the first surface through a resin flow channel between the side surface and the third surface.

### [Item 2]

The manufacturing method of the electric storage device recited in item 1, wherein
the protruding part is a ring-shaped protruding part that is provided continuously in a circumferential direction to be opposed to a whole circumference of the peripheral edge part of the connection surface.

### [Item 3]

The manufacturing method of the electric storage device recited in item 1 or 2, wherein
at the peripheral edge part of the connection surface, a recessed part is formed into which the protruding part of the metal mold fits.

### [Item 4]

The manufacturing method of the electric storage device according to any one of items 1 to 3, wherein
the protruding part is a tapered protruding part whose cross section area size becomes smaller at a position closer to a tip end.

### [Item 5]

The manufacturing method of the electric storage device according to any one of items 1 to 4, wherein
a recessed part into which the protruding part of the metal mold fits is formed at the peripheral edge part of the connection surface, and a side surface of the recessed part is inclined to have a surface contact with an inclined surface of the tapered protruding part.

### [Item 6]

The manufacturing method of the electric storage device according to any one of items 1 to 5, wherein
the first surface of the metal mold is a flat surface having a surface contact with a whole surface of the connection surface of the plate part.

### [Item 7]

An electric storage device, comprising:
an electrode assembly; and
a case configured to accommodate the electrode assembly, wherein
the case comprises:
   a case part that comprises a penetration hole;
   an electrode terminal that is inserted into the penetration hole; and
   a sealing material that is configured to seal the penetration hole and that is a resin member integrated with the case part, wherein
the electrode terminal comprises:
   a shaft part that is inserted into the penetration hole; and
   a plate part that is arranged along the case part,
the plate part comprises:
   a connection surface that is exposed to an outside of the case;
   a back surface at a side opposite to the connection surface; and
   a side surface that continues to the connection surface and the back surface, the sealing material comprises: a side surface protecting part configured to cover the side surface of the plate part, and
at the peripheral edge part of the connection surface, a recessed part being depressed from the connection surface is formed.

## Claims

1. A manufacturing method of an electric storage device, comprising:
preparing a case part (14) that comprises a penetration hole (14a);
inserting an electrode terminal (20) into the penetration hole (14a);
arranging the case part (14) and the electrode terminal (20) in an inside cavity of a metal mold (M); and
injecting a resin (R) into the inside cavity of the metal mold (M) and for integrally forming the case part (14) with a sealing material (30) configured to seal the penetration hole (14a), wherein
the electrode terminal (20) comprises:
a shaft part (22) that is inserted into the penetration hole (14a); and
a plate part (24) that is arranged along the case part (14) when the shaft part (22) has been inserted into the penetration hole (14a),
the plate part (24) comprises:
a connection surface (24a) that is exposed to an outside of the case part (14);
a back surface (24b) that is positioned at a side opposite to the connection surface (24a); and
a side surface (24c) that continues to the connection surface (24a) and the back surface (24b),
the metal mold (M) comprises:
a first surface (M1) that is a cavity surface (Mcs) having a surface contact with at least a peripheral edge part (24a1) of the connection surface (24a) of the plate part (24);
a third surface (M3) that is a cavity surface (Mcs) opposed with a distance to the side surface (24c) of the plate part (24); and
a protruding part (M1a) that is configured to protrude from the first surface (M1) to the peripheral edge part (24a1) of the connection surface (24a), and
at the integrally forming, an injection amount of the resin (R) to the inside cavity is controlled to make the protruding part (M1a) dam the resin (R) having reached to a position between the peripheral edge part (24a1) of the connection surface (24a) and the first surface (M1) through a resin flow channel (Mc3) between the side surface (24c) and the third surface (M3).

2. The manufacturing method of the electric storage device according to claim 1, wherein
the protruding part (M1a) is a ring-shaped protruding part that is provided continuously in a circumferential direction to be opposed to a whole circumference of the peripheral edge part (24a1) of the connection surface (24a).

3. The manufacturing method of the electric storage device according to claim 1 or 2, wherein
at the peripheral edge part (24a1) of the connection surface (24a), a recessed part (24e) is formed into which the protruding part (M1a) of the metal mold (M) fits.

4. The manufacturing method of the electric storage device according to any one of claims 1 to 3, wherein
the protruding part (M1a) is a tapered protruding part whose cross section area size becomes smaller at a position closer to a tip end.

5. The manufacturing method of the electric storage device according to any one of claims 1 to 4, wherein
a recessed part (24e) into which the protruding part (M1a) of the metal mold (M) fits is formed at the peripheral edge part (24a1) of the connection surface (24a), and a side surface (24e1) of the recessed part (24e) is inclined to have a surface contact with an inclined surface (M1b) of the tapered protruding part (M1a).

6. The manufacturing method of the electric storage device according to any one of claims 1 to 5, wherein
the first surface (M1) of the metal mold (M) is a flat surface having a surface contact with a whole surface of the connection surface (24a) of the plate part (24).

7. An electric storage device, comprising:
an electrode assembly (40); and
a case (10) configured to accommodate the electrode assembly (40), wherein
the case (10) comprises:
a case part (14) that comprises a penetration hole (14a);
an electrode terminal (20) that is inserted into the penetration hole (14a); and
a sealing material (30) that is configured to seal the penetration hole (14a) and that is a resin member integrated with the case part (14), wherein
the electrode terminal (20) comprises:
a shaft part (22) that is inserted into the penetration hole (14a); and
a plate part (24) that is arranged along the case part (14),
the plate part (24) comprises:
a connection surface (24a) that is exposed to an outside of the case (10);
a back surface (24b) at a side opposite to the connection surface (24a); and
a side surface (24c) that continues to the connection surface (24a) and the back surface (24b),
the sealing material (30) comprises: a side surface protecting part (36) configured to cover the side surface (24c) of the plate part (24), and
at the peripheral edge part (24a1) of the connection surface (24a), a recessed part (24e) being
depressed from the connection surface (24a) is formed.
